# EUROPEAN PATENT APPLICATION

(11) **EP 4 834 521 A1**
(43) Date of publication of application: **04.11.2026**
(21) Application number: 24912058.5
(22) Date of filing: 12.11.2024
(51) Int. Cl.: B23Q 3/157, B23Q 3/155, B23Q 3/16, G05B 19/4062, G05B 19/4063

(54) **NUMERICAL CONTROL DEVICE, CONTROL METHOD, AND PROGRAM**

(30) Priority: 27.12.2023 JP 2023220801
(71) Applicant: BROTHER KOGYO KABUSHIKI KAISHA, Nagoya-shi, Aichi 467-8561 (JP)
(72) Inventor: YOSHIKAWA Koya, Nagoya-shi, Aichi 467-8562 (JP)
(74) Representative: Becker, Eberhard
(86) International application number: PCT/JP2024/040103
(87) International publication number: WO 2025/142165

(57) **Abstract**

Provided are a numerical control device, a control method, and a program that can reduce the electrical power consumption of a servo motor that drives a tool magazine. The numerical control device detects the position of a main shaft in the Z-axis direction by an encoder of a Z-axis motor. The numerical control device interrupts the supply of electrical power to a magazine motor in a standby state in which the tool magazine is not operated. When the numerical control device outputs a tool replacement command, the main shaft moves from a processing area to a tool replacement area. The numerical control device resumes the supply of electrical power to the magazine motor on condition that it is detected that the main shaft is positioned in the tool replacement area when replacing a tool attached to the main shaft on the basis of the tool replacement command.

## Description

### TECHNICAL FIELD

The present invention relates to a numerical control device, a control method, and a program.

### BACKGROUND ART

Patent Document 1 discloses a tool changer capable of reducing power consumption in a servo motor that rotates a tool magazine. The tool changer exchanges tools between the tool magazine and a main shaft. The tool magazine has multiple tool pods and is rotated by the servo motor. The tool magazine is provided with an electromagnetic brake that operates when power supply to the servo motor is stopped. In the case where no subsequent tool exchange command is output in a predetermined time after the tool magazine is rotated, the tool changer interrupts the power supply to the servo motor and activates the electromagnetic brake. At the time when the subsequent tool exchange command is output, the tool changer supplies power to the servo motor and stops operation of the electromagnetic brake.

### Related Art Document

### Patent Document

Patent Document 1: Japanese Patent Application Laid-Open No. 2002-192434

### SUMMARY OF INVENTION

### Problem to be Solved by the Invention

In the case of a tool exchange command being output, the main shaft moves from a machining area where a workpiece is machined to a tool exchange area in order to exchange tools between the tool magazine and the main shaft. Since the tool changer resumes power supply to the servo motor at the time when the tool exchange command is output, power is consumed in the servo motor while the main shaft moves from the machining area to the tool exchange area.

An object of the present invention is to provide a numerical control device, a control method, and a program that are capable of reducing power consumption of a servo motor that drives a tool magazine.

### Means for Solving the Problem

The numerical control device according to the first aspect of the present invention is a numerical control device for controlling operation of a machine tool that includes: a main shaft that is capable of mounting a tool and is movable between a machining area where machining of a workpiece is performed using the tool and a tool exchange area where exchange of the tool is performed; and a tool magazine that is capable of loading the tool and transports the tool to be mounted on the main shaft to a tool exchange position by driving of a servo motor, the numerical control device being characterized by including: an interruption unit that interrupts power supply to the servo motor in a standby state where the tool magazine is not operated; a position detection unit that detects a position of the main shaft; and a resumption unit that resumes power supply to the servo motor which has been interrupted by the interruption unit on condition that the position detection unit detects that the main shaft is positioned within the tool exchange area.

In the case of the numerical control device of the first aspect outputting a tool exchange command, the main shaft moves from the machining area to the tool exchange area, and the tool magazine operates by driving of the servo motor. In the numerical control device, power supply to the servo motor is resumed on condition that the main shaft is detected to be positioned within the tool exchange area. Therefore, compared to the case where power supply to the servo motor is resumed at the time when the tool exchange command is output, the numerical control device is capable of reducing power consumption of the servo motor.

In the numerical control device, the tool magazine may be operable in the case where the main shaft is at a specific main shaft position within the tool exchange area, and the resumption unit may resume power supply to the servo motor on condition that the position detection unit detects that the main shaft is at the specific main shaft position. In the numerical control device, in the case of the main shaft reaching the specific main shaft position for operating the tool magazine in the tool exchange area, the tool magazine operates by driving of the servo motor. Since power supply to the servo motor is resumed immediately before starting operation of the tool magazine, the numerical control device is capable of further reducing power consumption of the servo motor.

In the numerical control device, the interruption unit may interrupt power supply to the servo motor on condition that operation of the tool magazine enabled by the servo motor is completed in a state where power supply to the servo motor has been resumed by the resumption unit. In the numerical control device, the tool magazine transports the tool to be mounted on the main shaft to the tool exchange position by driving of the servo motor. In the numerical control device, power supply to the servo motor is interrupted in the case of determining that operation of the tool magazine is completed. Therefore, compared to the case where power supply to the servo motor is performed during a period from completion of operation of the tool magazine until the main shaft moves to the machining area, the numerical control device is capable of reducing power consumption of the servo motor.

In the numerical control device, the interruption unit may interrupt power supply to the servo motor on condition that operation of the tool magazine enabled by the servo motor is completed in a state where power supply to the servo motor has been resumed by the resumption unit and that the position detection unit detects that the main shaft is positioned within the tool exchange area. In the numerical control device, operation of the tool magazine by driving of the servo motor is completed, and the main shaft moves from the tool exchange area to the machining area. In the numerical control device, power supply to the servo motor is interrupted on condition that the main shaft is detected to be positioned within the tool exchange area. Therefore, the numerical control device is capable of interrupting power supply to the servo motor at a position within the tool exchange area according to specifications, and is capable of reducing power consumption of the servo motor compared to the case where power supply to the servo motor is performed during a period from completion of operation of the tool magazine until the main shaft moves to the machining area.

In the numerical control device, the tool magazine may be operable in the case where the main shaft is at a specific main shaft position within the tool exchange area, the resumption unit may resume power supply to the servo motor on condition that the position detection unit detects that the tool magazine is operable and the main shaft is at the specific main shaft position within the tool exchange area, and the interruption unit may interrupt power supply to the servo motor in the case where operation of the tool magazine enabled by the servo motor is completed in a state where power supply to the servo motor has been resumed by the resumption unit, and the position detection unit detects that the main shaft has moved away from the specific main shaft position. In the numerical control device, power supply to the servo motor is performed while the servo motor is driven, and power supply to the servo motor is interrupted when driving of the servo motor is completed. Therefore, the numerical control device is capable of further reducing power consumption in the servo motor.

The numerical control device may include a switching unit that switches between enabling and disabling interruption of power supply to the servo motor performed by the interruption unit. Thereby, the numerical control device is capable of realizing specifications matched to the machine tool.

The control method according to the second aspect of the present invention is a control method for controlling operation of a machine tool that includes: a main shaft that is capable of mounting a tool and is movable between a machining area where machining of a workpiece is performed using the tool and a tool exchange area where exchange of the tool is performed; and a tool magazine that is capable of loading the tool and transports the tool to be mounted on the main shaft to a tool exchange position by driving of a servo motor, the control method being characterized by including: an interruption step of interrupting power supply to the servo motor in a standby state where the tool magazine is not operated; a position detection step of detecting a position of the main shaft; and a resumption step of resuming power supply to the servo motor which has been interrupted by the interruption step on condition that the position detection step detects that the main shaft is positioned within the tool exchange area.

The program according to the third aspect of the present invention is characterized by causing a computer, which controls operation of a machine tool including: a main shaft that is capable of mounting a tool and is movable between a machining area where machining of a workpiece is performed using the tool and a tool exchange area where exchange of the tool is performed; and a tool magazine that is capable of loading the tool and transports the tool to be mounted on the main shaft to a tool exchange position by driving of a servo motor, to execute: an interruption process of interrupting power supply to the servo motor in a standby state where the tool magazine is not operated; a position detection process of detecting a position of the main shaft; and a resumption process of resuming power supply to the servo motor which has been interrupted by the interruption process on condition that the position detection process detects that the main shaft is positioned within the tool exchange area.

The control method according to the second aspect and the program according to the third aspect achieve the same effects as the numerical control device according to the first aspect.

### BRIEF DESCRIPTION OF DRAWINGS

[FIG. 1] is a perspective view showing the machine tool 1.
[FIG. 2] is a longitudinal sectional view around the main shaft head 7.
[FIG. 3] is a block diagram showing the electrical configuration of the numerical control device 30 and the machine tool 1.
[FIG. 4] is a diagram showing control of power supply to the magazine motor 55 in each of the first mode and the second mode.
[FIG. 5] is a flowchart showing the main processing.
[FIG. 6] is a flowchart showing the main processing, which is a continuation of FIG. 5.
[FIG. 7] is a diagram showing the position of the main shaft 9 in the Z-axis direction.

### DESCRIPTION

Hereinafter, one embodiment of the present invention will be described with reference to the drawings. The referenced drawings are used to illustrate technical features that the present invention can adopt. That is, the configurations, etc. illustrated in the drawings are not intended to be limited thereto, but are merely explanatory examples. Left-right, front-rear, and up-down indicated by arrows in the drawings are used in the following description. The left-right direction, front-rear direction, and up-down direction of a machine tool 1 are the X-axis direction, Y-axis direction, and Z-axis direction of the machine tool 1, respectively.

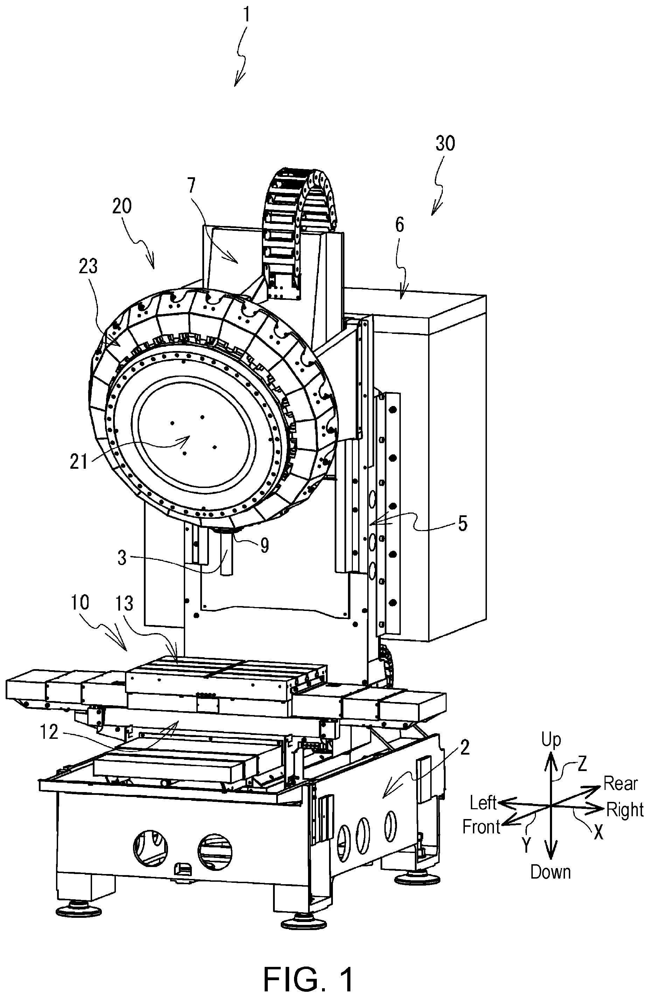

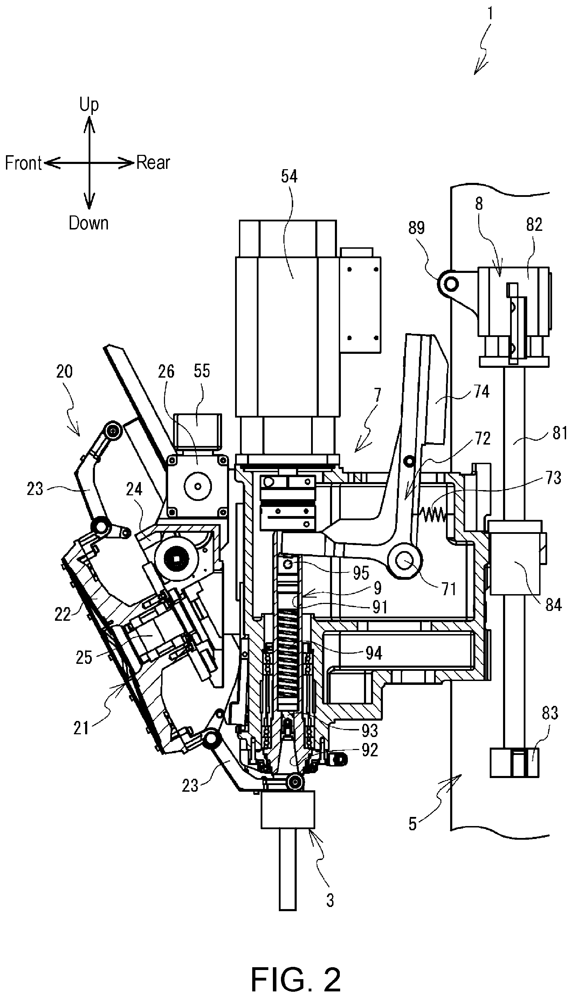

The machine tool 1 shown in FIG. 1 is a machine that rotates a tool 3 mounted on a main shaft 9 and performs cutting on a workpiece (not shown) held on the upper surface of a table 13. A numerical control device 30 (see FIG. 2) controls operation of the machine tool 1 based on NC programs which will be described later.

### <Structure of Machine Tool 1>

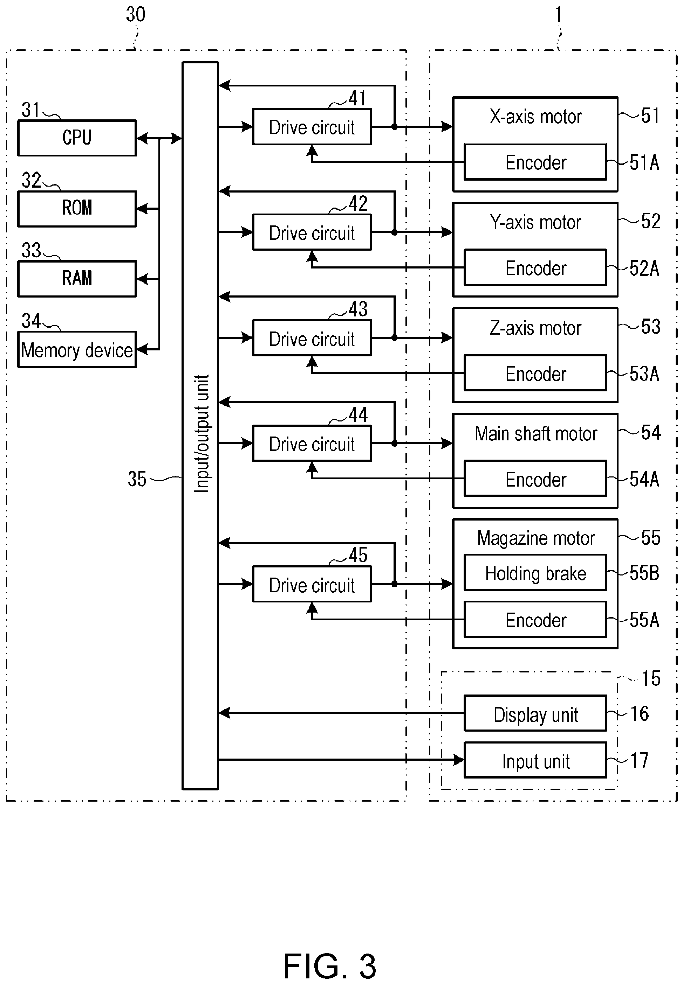

The structure of the machine tool 1 will be described with reference to FIG. 1. The machine tool 1 includes a base 2, a column 5, a table device 10, a Z-axis movement mechanism 8, a main shaft head 7, a main shaft 9, a tool changer 20, a control box 6, and an operation panel 15 (see FIG. 3). The base 2 is a substantially rectangular parallelepiped metal foundation that is long in the front-rear direction. The column 5 is fixed to the rear portion of the upper surface of the base 2. The column 5 is an upright pillar extending in the up-down direction. The control box 6 is fixed to the back surface of the column 5. The control box 6 houses the numerical control device 30.

The operation panel 15 is provided, for example, on the outer wall of a cover (not shown) that covers the machine tool 1, and includes an operation unit 16 and a display unit 17 (see FIG. 3). The operation unit 16 accepts input of various types of information, various instructions, and the like, and outputs these to the numerical control device 30. The display unit 17 displays various screens based on commands from the numerical control device 30.

The table device 10 includes a Y-axis movement mechanism (not shown), a Y-axis table 12, a table 13, and an X-axis movement mechanism (not shown). The Y-axis movement mechanism is provided on the upper surface of the base 2 and in front of the column 5 and includes a Y-axis motor 52 (see FIG. 3). The Y-axis movement mechanism moves the Y-axis table 12 in the Y-axis direction in response to driving of the Y-axis motor 52. The X-axis movement mechanism is provided on the upper portion of the Y-axis table 12 and includes an X-axis motor 51 (see FIG. 3). The X-axis movement mechanism moves the table 13 in the X-axis direction in response to driving of the X-axis motor 51. Therefore, the table 13 is movable above the base 2 in the X-axis direction and the Y-axis direction by the X-axis movement mechanism and the Y-axis movement mechanism.

The table device 10 includes the Y-axis movement mechanism (not shown), the Y-axis table 12, the X-axis movement mechanism (not shown), and the table 13. The Y-axis movement mechanism is provided on the front portion of the upper surface of the base 2 and includes a Y-axis rail, a Y-axis ball screw, and the Y-axis motor 52 (see FIG. 3). The Y-axis rail and the Y-axis ball screw extend in the Y-axis direction. The Y-axis rail guides the Y-axis table 12 in the Y-axis direction. The Y-axis table 12 has a rectangular plate shape in plan view, and a Y-axis nut (not shown) is provided on the lower surface thereof. The Y-axis nut is screwed to the Y-axis ball screw. When the Y-axis motor 52 rotates the Y-axis ball screw, the Y-axis table 12 moves in the Y-axis direction together with the Y-axis nut while being guided by the Y-axis rail.

The X-axis movement mechanism is provided on the upper surface of the Y-axis table 12 and includes an X-axis rail, an X-axis ball screw, and the X-axis motor 51 (see FIG. 3). The X-axis rail and the X-axis ball screw extend in the X-axis direction. The X-axis rail guides the table 13 in the X-axis direction. The table 13 is provided on the upper surface of the Y-axis table 12 and has a rectangular plate shape in plan view. A workpiece (not shown) is held on the upper surface of the table 13. An X-axis nut (not shown) is provided on the lower surface of the table 13. The X-axis nut is screwed to the X-axis ball screw. When the X-axis motor 51 rotates the X-axis ball screw, the table 13 moves in the X-axis direction together with the X-axis nut while being guided by the X-axis rail. Therefore, the table 13 is movable above the base 2 in the X-axis direction and the Y-axis direction by the X-axis movement mechanism and the Y-axis movement mechanism.

### <Structure of Z-axis Movement Mechanism 8>

As shown in FIG. 2, the Z-axis movement mechanism 8 is provided on the front portion of the column 5. The Z-axis movement mechanism 8 includes a Z-axis rail (not shown), a Z-axis ball screw 81, bearing units 82 and 83, a cam follower 89, and a Z-axis motor 53 (see FIG. 3). The Z-axis rail and the Z-axis ball screw 81 are provided on the front portion of the column 5 and extend in the Z-axis direction. The Z-axis ball screw 81 is inserted into the bearing units 82 and 83, and the bearing units 82 and 83 rotatably support the Z-axis ball screw 81. The bearing unit 82 is provided above the bearing unit 83. The cam follower 89 is provided on the front end of the bearing unit 82. The cam follower 89 slides on the cam surface of a plate cam 74 which will be described later.

The Z-axis motor 53 is fixed above the bearing unit 82. The Z-axis ball screw 81 is connected to an output shaft of the Z-axis motor 53 via a coupling (not shown). A Z-axis nut 84 is screwed to the Z-axis ball screw 81 between the bearing units 82 and 83. The Z-axis nut 84 is fixed to the main shaft head 7 which will be described later. When the Z-axis motor 53 rotates the Z-axis ball screw 81, the main shaft head 7 moves in the Z-axis direction together with the Z-axis nut 84 while being guided by the Z-axis rail.

### <Internal Structure of Main Shaft Head 7>

As shown in FIG. 2, the main shaft head 7 is provided on the front portion of the column 5 and has a box shape. The main shaft head 7 includes a main shaft motor 54, a support shaft 71, a crank lever 72, and a spring 73. The main shaft motor 54 is fixed to the front portion of the upper surface of the main shaft head 7.

The support shaft 71 extends in the left-right direction inside the rear portion of the main shaft head 7. The crank lever 72 has a substantially L-shape in left side view, and a bent portion engages with the support shaft 71. The crank lever 72 is swingable around the support shaft 71. The plate cam 74 is provided at the rear end of the crank lever 72. A cam surface capable of coming into contact with and separating from the cam follower 89 is formed on the back surface of the plate cam 74. The spring 73 is a compression coil spring extending in the front-rear direction. One end of the spring 73 is fixed to the back wall of the main shaft head 7. The other end of the spring 73 is fixed to the rear end of the crank lever 72 below the plate cam 74. The spring 73 constantly urges the crank lever 72 clockwise in right side view.

### <Structure of Main Shaft 9>

As shown in FIG. 2, the main shaft 9 is provided inside the front portion of the main shaft head 7 and extends in the up-down direction. The main shaft 9 is rotatably supported by the main shaft head 7. The main shaft 9 is connected to an output shaft of the main shaft motor 54. The main shaft 9 includes a shaft hole 91, a mounting hole 92, a holding unit 93, and a draw bar 94.

The shaft hole 91 is provided at the upper end portion of the main shaft 9. The mounting hole 92 is provided at the lower end portion of the main shaft 9 and communicates with the shaft hole 91. The holding unit 93 is provided at the lower end portion inside the shaft hole 91. The holding unit 93 is capable of holding the tool 3. The draw bar 94 is provided at the upper end portion of the holding unit 93 inside the shaft hole 91. At the upper end portion of the draw bar 94, a pin 95 is provided that protrudes to the outside of the main shaft 9 via a through hole (not shown) penetrating the main shaft 9 in the front-rear direction. The pin 95 is positioned below the front end portion of the crank lever 72. When the crank lever 72 swings, the front end portion of the crank lever 72 comes into contact with and separates from the pin 95.

### <Structure of Tool Changer 20>

As shown in FIG. 2, the tool changer 20 includes a tool magazine 21 and a magazine motor 55. The tool magazine 21 is of a turret type. The tool magazine 21 includes a support base 24, a support shaft 25, a magazine body 22, multiple grip arms 23, and a reducer 26.

The support base 24 is fixed to a frame (not shown). The frame is fixed to the column 5 and provided near the main shaft head 7. The support base 24 is positioned in front of the main shaft head 7 and rotatably supports the support shaft 25. The support shaft 25 extends obliquely downward to the front of the machine tool 1. The magazine body 22 is provided on the front portion of the support base 24 and supported by the support shaft 25. The magazine body 22 has a disk shape and is provided facing forward to the front of the machine tool 1.

The grip arms 23 are provided at predetermined intervals on the outer periphery of the magazine body 22. Each grip arm 23 is provided to be swingable in the front-rear direction of the magazine body 22. A tip portion of the grip arm 23 detachably grips the tool 3. That is, the tool magazine 21 loads the tool 3 by the multiple grip arms 23. The reducer 26 is provided on the upper portion of the support base 24. The reducer 26 includes multiple gears and cams (not shown). The magazine motor 55 is provided on the upper portion of the reducer 26. A rotation shaft of the magazine motor 55 is connected to the reducer 26. Through driving of the magazine motor 55, the magazine body 22 rotates via the reducer 26.

### <Electrical Configuration of Numerical Control Device 30 and Machine Tool 1>

The electrical configuration of the numerical control device 30 and the machine tool 1 will be described with reference to FIG. 3. The numerical control device 30 includes a CPU 31, a ROM 32, a RAM 33, a memory device 34, an input/output unit 35, and drive circuits 41 to 45. The CPU 31 performs overall control of the numerical control device 30.

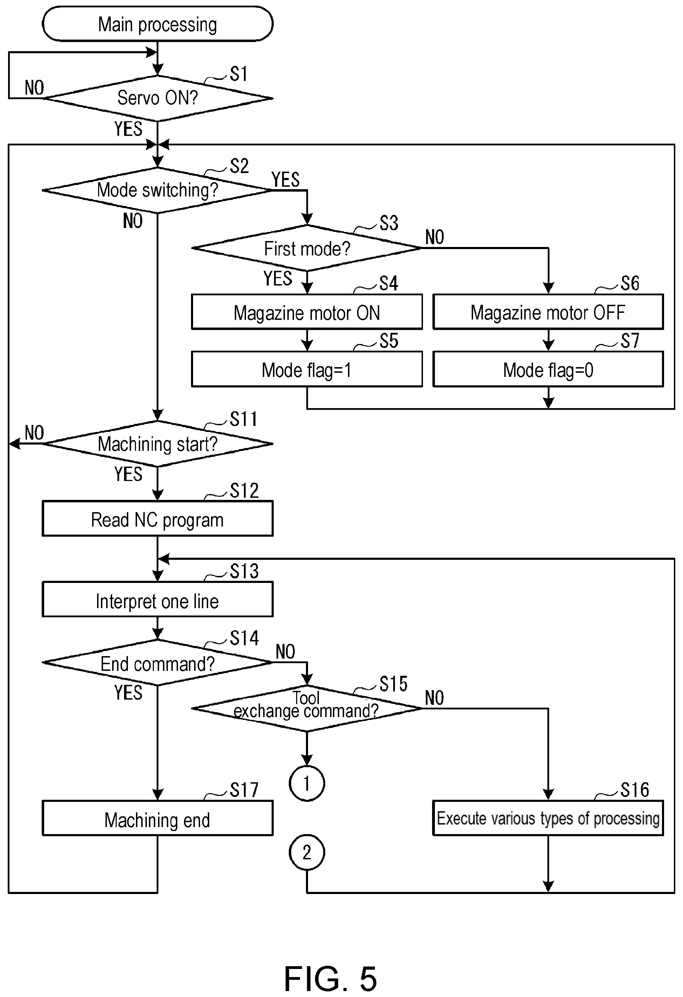

The ROM 32 stores various types of setting information. The RAM 33 temporarily stores various types of information. The memory device 34 is non-volatile and stores multiple NC programs which will be described later, a control program for executing main processing (see FIG. 5), and the like. The NC program is a machining program composed of multiple lines. Each line of the NC program includes control commands for performing various operations including axis movement and tool exchange of the machine tool 1. The numerical control device 30 executes the control commands constituting the NC program line by line and controls the operation of the machine tool 1.

The input/output unit 35 performs input/output of various signals among the CPU 31, the RAM 33, the memory device 34, the input/output unit 35, the drive circuits 41 to 45, the operation unit 16, and the display unit 17.

The drive circuit 41 is connected to the input/output unit 35, the X-axis motor 51, and an encoder 51A. The drive circuit 42 is connected to the input/output unit 35, the Y-axis motor 52, and an encoder 52A. The drive circuit 43 is connected to the input/output unit 35, the Z-axis motor 53, and an encoder 53A. The drive circuit 44 is connected to the input/output unit 35, the main shaft motor 54, and an encoder 54A. The drive circuit 45 is connected to the input/output unit 35, the magazine motor 55, and an encoder 55A.

The drive circuits 41, 42, 43, 44, and 45 output drive current to the X-axis motor 51, the Y-axis motor 52, the Z-axis motor 53, the main shaft motor 54, and the magazine motor 55 based on commands input from the CPU 31. The X-axis motor 51, the Y-axis motor 52, the Z-axis motor 53, the main shaft motor 54, and the magazine motor 55 are all servo motors and rotate according to the input drive current.

The encoders 51A, 52A, 53A, 54A, and 55A are all absolute encoders and detect the rotational positions of the X-axis motor 51, the Y-axis motor 52, the Z-axis motor 53, the main shaft motor 54, and the magazine motor 55.

The encoders 51A, 52A, 53A, 54A, and 55A output feedback signals indicating the detected rotational positions to the drive circuits 41, 42, 43, 44, and 45. The drive circuits 41, 42, 43, 44, and 45 perform feedback control for the X-axis motor 51, the Y-axis motor 52, the Z-axis motor 53, the main shaft motor 54, and the magazine motor 55 based on the feedback signals. The CPU 31 detects the position of the table 13 in the X-axis direction, the position of the table 13 in the Y-axis direction, the position of the main shaft 9 in the Z-axis direction, and the rotational position of the tool magazine 21, respectively, based on the feedback signals output by the encoders 51A, 52A, 53A, and 55A.

The magazine motor 55 includes a holding brake 55B. The holding brake 55B is a non-excitation operation type brake and operates without consuming power. The holding brake 55B holds the rotation shaft of the magazine motor 55 in the case of no power supply to the magazine motor 55, and holds the state of the tool magazine 21 (the rotational position of the tool magazine 21). The holding brake 55B releases the held rotation shaft of the magazine motor 55 in the case of power supply to the magazine motor 55, and enables the tool magazine 21 to be rotated by the magazine motor 55. In the case of power supply to the magazine motor 55, the magazine motor 55 is driven based on a command that determines the rotational position of the tool magazine 21, and holds the state of the tool magazine 21.

### <Exchange of Tool 3 Performed by Tool Changer 20>

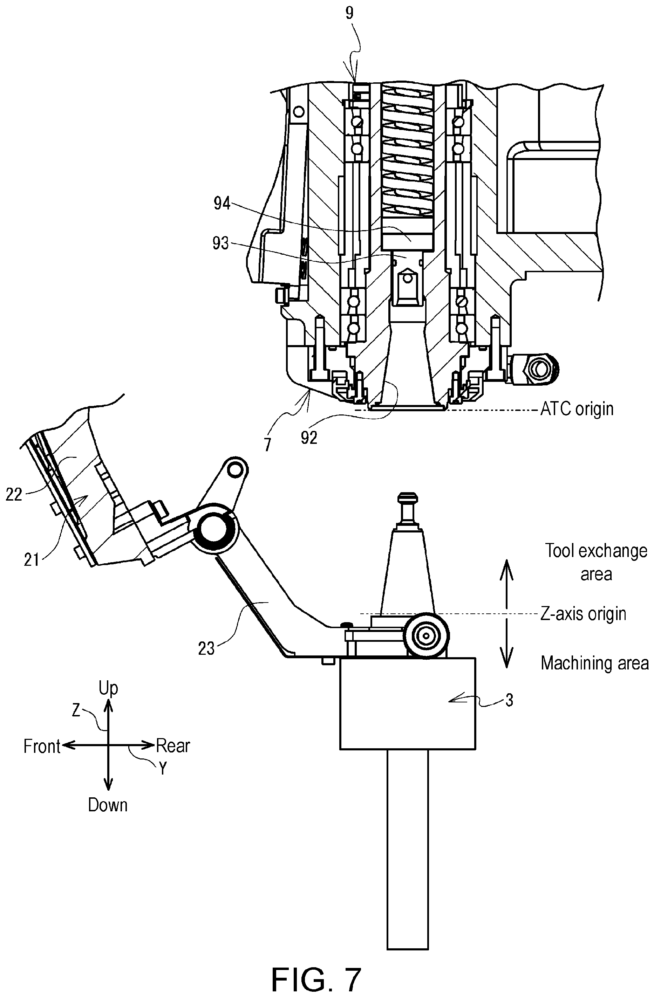

Exchange of the tool 3 performed by the tool changer 20 will be described with reference to FIG. 2 and FIG. 7. In the case of exchanging the tool 3 by the tool changer 20, the numerical control device 30 outputs a tool exchange command. When the numerical control device 30 outputs the tool exchange command, the main shaft 9 ascends from a machining area shown in FIG. 7 by driving of the Z-axis motor 53. The machining area is an area for machining a workpiece, and is an area on the table 13 side (lower side) with respect to a machine origin of the Z-axis. Hereinafter, the machine origin of the Z-axis is referred to as a Z-axis origin.

The main shaft 9 ascends and reaches the tool exchange area shown in FIG. 7. The tool exchange area is an area for performing exchange of the tool 3 to be mounted on the main shaft 9, and is an area on the upper side with respect to the machine origin of the Z-axis. When the main shaft 9 reaches the tool exchange area, the cam follower 89 slides on the cam surface of the plate cam 74. The crank lever 72 rotates counterclockwise in right side view around the support shaft 71, and the front end portion of the crank lever 72 engages with the pin 95 from above and presses the draw bar 94 downward. The draw bar 94 urges the holding unit 93 downward, and the holding unit 93 releases the held tool 3. Simultaneously, the grip arm 23 at a tool exchange position grips the tool 3. The tool exchange position is the lowermost position of the magazine body 22 and is a position that is close to and faces the main shaft 9.

The main shaft 9 ascends from the Z-axis origin to an ATC origin shown in FIG. 7. The ATC origin is a position of the main shaft 9 where the tool magazine 21 becomes rotatable, and is a position of the main shaft 9 within the tool exchange area. The tool 3 is detached from the mounting hole 92 of the main shaft 9 in a state of being gripped by the grip arm 23. The tool 3 detached from the main shaft 9 is referred to as a first tool.

When the main shaft 9 reaches the ATC origin, the magazine motor 55 is driven based on the control command of the numerical control device 30, and the magazine body 22 of the tool magazine 21 rotates. The tool changer 20 indexes a tool 3 (hereinafter referred to as a second tool) designated by the tool exchange command to the tool exchange position. At this time, the magazine body 22 rotates from a state where the first tool is at the tool exchange position to a state where the second tool is at the tool exchange position. The second tool indexed to the tool exchange position is positioned below the main shaft 9 that has moved to the ATC origin.

The main shaft 9 descends from the ATC origin by rotation of the Z-axis motor 53. The second tool enters the mounting hole 92 of the main shaft 9. The cam follower 89 slides on the cam surface of the plate cam 74. The crank lever 72 rotates clockwise in right side view around the support shaft 71, and the front end portion of the crank lever 72 separates from the pin 95 and releases the downward pressing of the draw bar 94. The draw bar 94 releases the downward urging of the holding unit 93, and the holding unit 93 holds the tool 3. The second tool is detached from the grip arm 23 at the tool exchange position. The tool 3 is mounted to the mounting hole 92 of the main shaft 9. The main shaft 9 reaches the Z-axis origin, which is the upper end of the machining area, from the tool exchange area, and the exchange of the tool 3 is completed.

### <Control Modes of Power Supply to Magazine Motor 55>

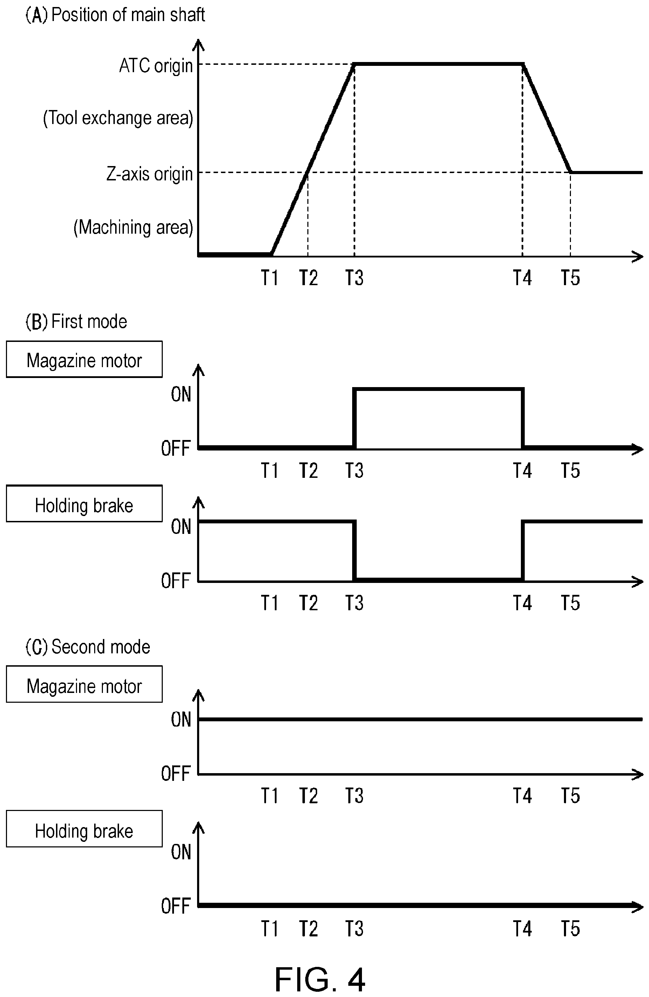

The control modes of power supply to the magazine motor 55 will be described with reference to FIG. 4. The numerical control device 30 switches between a first mode and a second mode as the control modes of power supply to the magazine motor 55. The first mode is a mode in which power is supplied to the magazine motor 55 when the tool magazine 21 is rotated as an operation of the tool magazine 21, and power is not supplied to the magazine motor 55 in a standby state where the tool magazine 21 is not rotated. The second mode is a mode in which power is supplied to the magazine motor 55 regardless of the state of the tool magazine 21. Here, "power supply to the magazine motor 55" means supply of power to a power terminal that is for receiving drive current input in order to rotate the magazine motor 55. That is, it is sufficient that power supply to the power terminal of the magazine motor 55 is controlled, and power may or may not be supplied to a signal terminal for transmitting and receiving signals that are for controlling the magazine motor 55.

More specifically, in the first mode, when exchange of the tool 3 to be mounted on the main shaft 9 is not performed, power is not supplied to the magazine motor 55, and the state of the tool magazine 21 is held by the holding brake 55B. The time when exchange of the tool 3 to be mounted on the main shaft 9 is not performed is, for example, a time when the workpiece is machined using the tool 3.

In the first mode, power supply to the magazine motor 55 is performed on condition that the main shaft 9 is detected to be positioned within the tool exchange area. In the present embodiment, in the case where the main shaft 9 is detected to be positioned at the ATC origin within the tool exchange area, power is supplied to the magazine motor 55. When the numerical control device 30 outputs a tool exchange command at time T1 to exchange the tool 3, the main shaft 9 positioned in the machining area ascends toward the ATC origin within the tool exchange area.

When the main shaft 9 reaches the ATC origin at time T3 (>T1), the holding brake 55B is released to rotate the tool magazine 21, and power supply to the magazine motor 55 is resumed. The determination of whether the main shaft 9 has reached the ATC origin is performed based on the position of the main shaft 9 in the Z-axis direction detected by the encoder 53A.

The tool magazine 21 rotates by driving of the magazine motor 55. When the tool 3 to be mounted on the main shaft 9 is indexed to the tool exchange position at time T4 (>T3), the main shaft 9 starts descending from the ATC origin. The determination of whether the tool 3 to be mounted on the main shaft 9 has been indexed to the tool exchange position is performed based on the rotational position of the tool magazine 21 detected by the encoder 55A.

In the first mode, power supply to the magazine motor 55 is interrupted on condition that rotation of the tool magazine 21 is completed. In the present embodiment, power supply to the magazine motor 55 is interrupted on condition that the main shaft 9 is detected to be at a predetermined position within the tool exchange area. Here, "on condition that the main shaft 9 is detected to be positioned within the tool exchange area" means that the main shaft 9 is detected to be separated from the predetermined position within the tool exchange area. In the present embodiment, the predetermined position within the tool exchange area for the main shaft 9 is the ATC origin. When the main shaft 9 that starts descending is separated from the ATC origin, power supply to the magazine motor 55 is interrupted, and the holding brake 55B operates. The determination of whether the main shaft 9 has been separated from the ATC origin is performed based on the position of the main shaft 9 in the Z-axis direction detected by the encoder 53A.

Since no power is consumed in the operation of the holding brake 55B, power is consumed by the magazine motor 55 in the first mode during the period from time T3 to time T4. Then, until the tool magazine 21 subsequently rotates based on a tool exchange command, power is not supplied to the magazine motor 55, and the state of the tool magazine 21 is held by the holding brake 55B.

On the other hand, in the second mode, power is supplied to the magazine motor 55 regardless of the state of the tool magazine 21, so the state of the tool magazine 21 is maintained by the magazine motor 55 that drives based on the feedback signal from the encoder 55A. For example, the tool magazine 21 may rotate from a designated rotational position due to an unbalanced load generated in the tool magazine 21 by the loading state of the tool 3. In this case, the drive circuit 45 drives the magazine motor 55 based on the feedback signal to rotate the tool magazine 21 in reverse so that the tool magazine 21 reaches the designated rotational position. In the second mode, the magazine motor 55 is driven in this way to maintain the state of the tool magazine 21, and therefore power is constantly consumed by the magazine motor 55.

### <Main Processing>

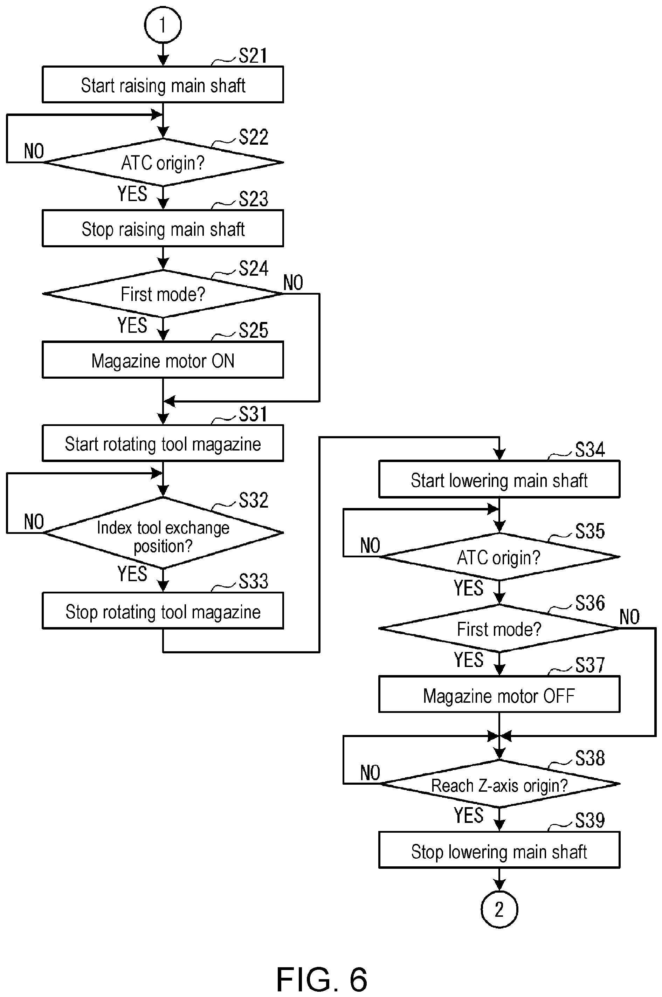

The main processing executed by the CPU 31 will be described with reference to FIG. 5 and FIG. 6. The main processing starts by calling a control program for the main processing from the memory device 34 and executing the called control program in the case of the power of the machine tool 1 and the numerical control device 30 being turned on.

As shown in FIG. 5, when the main processing starts, the CPU 31 determines whether power supply to the X-axis motor 51, the Y-axis motor 52, the Z-axis motor 53, the main shaft motor 54, and the magazine motor 55 is being performed (S1). For example, in the case of the machine tool 1 having made an emergency stop due to an error in the previous use, power supply to the X-axis motor 51, the Y-axis motor 52, the Z-axis motor 53, the main shaft motor 54, and the magazine motor 55 may not be performed when the power of the machine tool 1 is turned on. In the case of the CPU 31 determining that power supply to the X-axis motor 51, the Y-axis motor 52, the Z-axis motor 53, the main shaft motor 54, and the magazine motor 55 is not being performed (S1: NO), the processing returns to S1.

In the case of the CPU 31 determining that power supply to the X-axis motor 51, the Y-axis motor 52, the Z-axis motor 53, the main shaft motor 54, and the magazine motor 55 is being performed (S1: YES), the CPU 31 determines whether a mode switching instruction has been received (S2). The mode switching instruction is an instruction for switching to the second mode in the case of the control mode being the first mode, and for switching to the first mode in the case of the control mode being the second mode. An operator inputs the mode switching instruction using the operation unit 16 of the operation panel 15.

In the case of the CPU 31 determining that the mode switching instruction has been received (S2: YES), the CPU 31 determines whether the control mode is the first mode (S3). In the case of the CPU 31 determining that the control mode is the first mode (S3: YES), the CPU 31 resumes power supply to the magazine motor 55 (S4) and releases the operation of the holding brake 55B to switch the control mode from the first mode to the second mode. The CPU 31 sets the value of a mode flag to 1 (S5) and returns the processing to S2. The value of the mode flag indicates whether the control mode is the first mode or the second mode. In the case of the value of the mode flag being 0, it indicates that the control mode is the first mode. In the case of the value of the mode flag being 1, it indicates that the control mode is the second mode.

In the case of the CPU 31 determining that the control mode is not the first mode (S3: NO), the CPU 31 interrupts power supply to the magazine motor 55 (S6) and operates the holding brake 55B to switch the control mode from the second mode to the first mode. The holding brake 55B holds the state of the tool magazine 21. The CPU 31 sets the value of the mode flag to 0 (S5) and returns the processing to S2.

In the case of the CPU 31 determining that the mode switching instruction has not been received (S2: NO), the CPU 31 determines whether a machining start instruction has been received (S11). The machining start instruction is an instruction for machining a workpiece. The operator inputs the machining start instruction using the operation unit 16 of the operation panel 15. In the case of the CPU 31 determining that the machining start instruction has not been received (S11: NO), the processing returns to S2.

In the case of the CPU 31 determining that the machining start instruction has been received (S11: YES), the CPU 31 reads one designated NC program from the multiple NC programs stored in the memory device 34 (S12). It is noted that when machining of a workpiece is performed, the holding brake 55B holds the state of the tool magazine 21 in the case of the control mode being the first mode, and the magazine motor 55 holds the state of the tool magazine 21 in the case of the control mode being the second mode. The main shaft 9 is positioned in the machining area.

The CPU 31 interprets a control command for one line from the read NC program (S13). The CPU 31 determines whether the interpreted control command is an end command (S14). The end command is a control command that terminates execution of the NC program. In the case of the CPU 31 determining that the interpreted control command is not the end command (S14: NO), the CPU 31 determines whether the interpreted control command is a tool exchange command (S15). In the case of the CPU 31 determining that the interpreted control command is the tool exchange command (S15: YES), the processing proceeds to S21 (see FIG. 6).

As shown in FIG. 6, the CPU 31 drives the Z-axis motor 53 to start raising the main shaft 9 in order to exchange with the tool 3 to be mounted on the main shaft 9 (S21). The main shaft 9 ascends from the machining area toward the ATC origin within the tool exchange area. The tool 3 that has been mounted on the main shaft 9 is detached from the main shaft 9 and gripped by the grip arm 23 of the tool magazine 21.

The CPU 31 determines whether the main shaft 9 is positioned at the ATC origin as a condition for detecting that the main shaft 9 is positioned within the tool exchange area (S22). The CPU 31 makes the determination in S22 based on the rotational position of the Z-axis motor 53 specified by the encoder 53A. In the case of the CPU 31 determining that the main shaft 9 is not positioned at the ATC origin (S22: NO), the processing returns to S22. In the case of the CPU 31 determining that the main shaft 9 is positioned at the ATC origin (S22: YES), the CPU 31 stops driving the Z-axis motor 53 to stop the ascent of the main shaft 9 (S23).

The CPU 31 determines whether the control mode is the first mode (S24). In the case of the CPU 31 determining that the value of the mode flag is 0 and the control mode is the first mode (S24: YES), the CPU 31 resumes power supply to the magazine motor 55 that has been interrupted (S25). When power supply to the magazine motor 55 is resumed, the operation of the holding brake 55B is released, so the tool magazine 21 becomes rotatable. The CPU 31 proceeds the processing to S31.

In the case of the CPU 31 determining that the value of the mode flag is 1 and the control mode is not the first mode (S24: NO), the processing proceeds to S31. In this case, the control mode is the second mode, power is constantly supplied to the magazine motor 55, and the tool magazine 21 is rotatable.

The CPU 31 drives the magazine motor 55 to rotate the magazine body 22 of the tool magazine 21 (S31). The CPU 31 rotates the tool magazine 21 so that the tool 3 to be mounted on the main shaft 9 is indexed to the tool exchange position.

The CPU 31 determines whether the tool 3 to be mounted on the main shaft 9 has been indexed to the tool exchange position as a condition for the completion of rotation of the tool magazine 21 by the magazine motor 55 (S32). The CPU 31 makes the determination in S32 based on the rotational position of the magazine motor 55 specified by the encoder 55A. In the case of the CPU 31 determining that the tool 3 to be mounted on the main shaft 9 has not been indexed to the tool exchange position (S32: NO), the processing returns to S32. In the case of the CPU 31 determining that the tool 3 to be mounted on the main shaft 3 has been indexed to the tool exchange position (S32: YES), the CPU 31 stops driving the magazine motor 55 to stop the rotation of the tool magazine 21 (S33).

The CPU 31 drives the Z-axis motor 53 to start lowering the main shaft 9 in order to mount the tool 3 indexed to the tool exchange position on the main shaft 9 (S34). The main shaft 9 separates from the ATC origin and descends toward the machining area.

The CPU 31 determines whether the main shaft 9 has separated from the ATC origin as a condition for detecting that the main shaft 9 is positioned within the tool exchange area (S35). The CPU 31 makes the determination in S35 based on the rotational position of the Z-axis motor 53 specified by the encoder 53A. In the case of the CPU 31 determining that the main shaft 9 has not separated from the ATC origin (S35: NO), the processing returns to S35. In the case of the CPU 31 determining that the main shaft 9 has separated from the ATC origin (S35: YES), the CPU 31 determines whether the control mode is the first mode (S36).

In the case of the CPU 31 determining that the value of the mode flag is 0 and the control mode is the first mode (S36: YES), the CPU 31 interrupts power supply to the magazine motor 55 that has been resumed (S37). When power supply to the magazine motor 55 is interrupted, the holding brake 55B operates, so the state of the tool magazine 21 is held by the holding brake 55B. The CPU 31 proceeds the processing to S38.

In the case of the CPU 31 determining that the value of the mode flag is 1 and the control mode is not the first mode (S36: NO), the processing proceeds to S38. In this case, the control mode is the second mode, power is constantly supplied to the magazine motor 55, and the state of the tool magazine 21 is held by the magazine motor 55.

The CPU 31 determines whether the main shaft 9 that has started descending in S34 has reached the Z-axis origin, which is the upper end of the machining area, based on the rotational position of the Z-axis motor 53 specified by the encoder 53A (S38). In the case of the CPU 31 determining that the main shaft 9 has not reached the Z-axis origin (S38: NO), the processing returns to S38. In the case of the CPU 31 determining that the main shaft 9 has reached the Z-axis origin (S38: YES), the CPU 31 stops driving the Z-axis motor 53 to stop the descent of the main shaft 9 (S39), and the processing returns to S13 (see FIG. 5).

As shown in FIG. 5, in the case of the CPU 31 determining that the interpreted control command is not the tool exchange command (S15: NO), the CPU 31 executes various types of processing based on the control command (S16), and the processing returns to S13. The various types of processing executed in S16 include, for example, positioning processing of the main shaft 9 and rotation processing of the main shaft 9.

In the case of the CPU 31 determining that the interpreted control command is the end command (S14: YES), the CPU 31 ends machining of the workpiece based on the NC program (S17), and the processing returns to S2.

### <Operation and Effect of the Present Embodiment>

As described above, the numerical control device 30 detects the position of the main shaft 9 in the Z-axis direction by the encoder 55A. The numerical control device 30 interrupts power supply to the magazine motor 55 in a standby state where the tool magazine 21 is not operated (S6, S37). In the case of the numerical control device 30 exchanging the tool 3 to be mounted on the main shaft 9 based on a tool exchange command, the CPU 31 detects the position of the main shaft 9 in the Z-axis direction by the encoder 55A (S22), and resumes power supply to the magazine motor 55 on condition that the main shaft 9 is detected to be positioned within the tool exchange area (S25). In the numerical control device 30, when a tool exchange command is output, the main shaft 9 moves from the machining area to the tool exchange area, and the tool magazine 21 rotates by driving of the magazine motor 55. In the numerical control device 30, power supply to the magazine motor 55 is resumed on condition that the main shaft 9 is detected to be positioned within the tool exchange area. Therefore, compared to the case where power supply to the magazine motor 55 is resumed at the time when the tool exchange command is output, the numerical control device 30 is capable of reducing power consumed by the magazine motor 55 while the main shaft 9 moves from the machining area to the tool exchange area.

The numerical control device 30 resumes power supply to the magazine motor 55 on condition that the main shaft 9 is detected to be positioned at the ATC origin (S22: YES) (S25). In the numerical control device 30, the tool magazine 21 is rotatable in the case of the main shaft 9 being positioned at the ATC origin within the tool exchange area. In the case of exchanging the tool 3 based on a tool exchange command, the numerical control device 30 drives the magazine motor 55 to rotate the tool magazine 21 when the main shaft 9 reaches the ATC origin. In the numerical control device 30, since power supply to the magazine motor 55 is resumed immediately before starting rotation of the tool magazine 21, power consumption in the magazine motor 55 is further reduced.

The numerical control device 30 interrupts power supply to the magazine motor 55 on condition that rotation of the tool magazine 21 by the magazine motor 55 is completed (S32: YES) and the main shaft 9 is detected to be positioned within the tool exchange area (S35) (S37). In the numerical control device 30, when rotation of the tool magazine 21 by the magazine motor 55 is completed, the main shaft 9 moves from the machining area to the tool exchange area. In the numerical control device 30, power supply to the magazine motor 55 is interrupted again on condition that the main shaft 9 is detected to be positioned within the tool exchange area. Therefore, the numerical control device 30 is capable of reducing power consumed by the magazine motor 55 while the main shaft 9 moves from the tool exchange area to the machining area.

The numerical control device 30 resumes power supply to the magazine motor 55 on condition that the main shaft 9 is detected to be positioned at the ATC origin within the tool exchange area (S22) (S31). Then, the numerical control device 30 interrupts power supply to the magazine motor 55 on condition that rotation of the tool magazine 21 by driving of the magazine motor 55 to which power supply has been resumed is completed (S32) and the main shaft 9 is detected to be positioned at the ATC origin (S35) (S37). In the numerical control device 30, power supply to the magazine motor 55 is performed during driving of the magazine motor 55 (from time T3 to time T4), and when rotation of the tool magazine 21 by driving of the magazine motor 55 is completed, power supply to the magazine motor 55 is interrupted. Therefore, the numerical control device 30 is capable of further reducing power consumption of the magazine motor 55.

The numerical control device 30 switches between the first mode (S7) that interrupts power supply to the magazine motor 55 and the second mode (S5) that constantly performs power supply to the magazine motor 55. Thereby, the numerical control device 30 is capable of realizing specifications matched to the machine tool 1.

### <Modification Example>

The present invention can be modified in various ways from the above embodiment. The various modification examples described below can be combined with each other as long as no contradiction occurs. The numerical control device 30 may not be provided in the machine tool 1, and may be provided separately from the machine tool 1. For example, the numerical control device 30 may be a control device (PC, dedicated machine, or the like) electrically connected to the machine tool 1.

For example, a microcomputer, ASIC (Application Specific Integrated Circuits), FPGA (Field Programmable Gate Array), or the like may be used instead of the CPU 31 for control of the numerical control device 30. The main processing may be distributed and processed by multiple control devices.

The non-transitory storage medium such as the ROM 32 and the memory device 34 may be any storage medium capable of retaining information regardless of the period for storing information. The non-transitory storage medium may not include a transitory storage medium (for example, transmitted signals). The control program for executing the main processing may be downloaded from a server (not shown) connected to a network (that is, transmitted as a transmission signal) and stored in the memory device 34. In this case, the control program may be stored in a non-transitory storage medium such as an HDD included in the server.

The configuration of the machine tool 1 may be appropriately changed as long as the main shaft 9 is movable between the machining area and the tool exchange area. The machine tool 1 is not limited to a vertical machine tool in which the main shaft 9 extends vertically, and may be a horizontal machine tool in which the main shaft 9 extends horizontally. The direction in which the main shaft 9 moves is not limited to the Z-axis direction, and the main shaft 9 may be movable in the X-axis direction and the Y-axis direction.

The tool magazine 21 may transport the tool 3 to be mounted on the main shaft 9 to the tool exchange position by driving of a servo motor. In the above embodiment, the tool magazine 21 is of a turret type, but the tool magazine 21 may be, for example, of an arm type. In the above embodiment, as an operation of the tool magazine 21, the magazine body 22 rotates around the center of the support shaft 25 by driving of the magazine motor 55, but the tool magazine 21 may perform operations other than rotation. For example, as an operation of the tool magazine 21, the magazine body 22 may translate by driving of the magazine motor 55. In the above embodiment, the drive circuits 41 to 45 are provided in the numerical control device 30, but the drive circuits 41 to 45 may be provided in the machine tool 1.

In the above embodiment, the numerical control device 30 detects the position of the main shaft 9 in the Z-axis direction based on the rotational position of the Z-axis motor 53 specified by the encoder 53A. In contrast, the numerical control device 30 may estimate the speed of the main shaft 9 based on a command input to the drive circuit 43, and detect the position of the main shaft 9 in the Z-axis direction based on the estimated speed.

In the above embodiment, the numerical control device 30 resumes power supply to the magazine motor 55 on condition that the main shaft 9 is detected to be positioned at the ATC origin. In contrast, the numerical control device 30 may resume power supply to the magazine motor 55 on condition that the main shaft 9 is detected to be positioned within the tool exchange area. That is, power supply to the magazine motor 55 may be resumed in the case of the main shaft 9 being at a position different from the ATC origin within the tool exchange area. The position within the tool exchange area that is different from the ATC origin is, for example, the Z-axis origin at the lower end of the tool exchange area.

In the above embodiment, the numerical control device 30 interrupts power supply to the magazine motor 55 in the case of the rotation of the tool magazine 21 being completed and the main shaft 9 being separated from the ATC origin within the tool exchange area. In contrast, the numerical control device 30 may not interrupt power supply to the magazine motor 55 within the tool exchange area, and may interrupt power supply to the magazine motor 55 after the main shaft 9 is positioned in the machining area.

The numerical control device 30 may interrupt power supply to the magazine motor 55 at the time when determining that the rotation of the tool magazine 21 is completed. In this case, the numerical control device 30 may determine that the rotation of the tool magazine 21 is completed when the tool 3 to be mounted on the main shaft 9 is indexed to the tool exchange position, based on the rotational position of the magazine motor 55 specified by the encoder 55A. The numerical control device 30 may determine that the rotation of the tool magazine 21 is completed when a predetermined time elapses after the magazine motor 55 is driven.

In the above embodiment, the numerical control device 30 interrupts power supply to the magazine motor 55 on condition that the main shaft 9 is detected to be positioned at the ATC origin. In contrast, the numerical control device 30 may interrupt power supply to the magazine motor 55 on condition that the main shaft 9 is detected to be positioned within the tool exchange area. That is, the numerical control device 30 may interrupt power supply to the magazine motor 55 in the case of the main shaft 9 being at a position different from the ATC origin within the tool exchange area in a state where the rotation of the tool magazine 21 is completed. The position within the tool exchange area that is different from the ATC origin is, for example, the Z-axis origin at the lower end of the tool exchange area. The position of the main shaft 9 that serves as a criterion for determining whether to resume power supply to the magazine motor 55 and the position of the main shaft 9 that serves as a criterion for determining whether to interrupt power supply to the magazine motor 55 may be different from each other as long as the positions are within the tool exchange area.

The numerical control device 30 may be further switchable to a control mode different from the first mode and the second mode. The numerical control device 30 may control power supply to the magazine motor 55 in the first mode without switching the control mode.

### <Others>

The CPU 31 that executes the processing of S6 and S37 is an example of the "interruption unit" of the present invention. The processing of S6 and S37 is an example of the "interruption step" and "interruption process" of the present invention. The CPU 31 that executes the processing of S22 and S35 is an example of the "position detection unit". The processing of S22 and S35 is an example of the "position detection step" and "position detection process" of the present invention. The CPU 31 that executes the processing of S25 is an example of the "resumption unit" of the present invention. The processing of S25 is an example of the "resumption step" and "resumption process" of the present invention. The ATC origin is an example of the "specific main shaft position" of the present invention. The CPU 31 that executes the processing of S4 and S6 is an example of the "switching unit" of the present invention.

### Description of Reference Numerals

- 1: machine tool
- 8: Z-axis movement mechanism
- 9: main shaft
- 20: tool changer
- 21: tool magazine
- 30: numerical control device
- 31: CPU
- 53: Z-axis motor
- 53A: encoder
- 55: magazine motor
- 55A: encoder
- 55B: holding brake

## Claims

1. A numerical control device for controlling operation of a machine tool that comprises: a main shaft that is capable of mounting a tool and is movable between a machining area where machining of a workpiece is performed using the tool and a tool exchange area where exchange of the tool is performed; and a tool magazine that is capable of loading the tool and transports the tool to be mounted on the main shaft to a tool exchange position by driving of a servo motor, the numerical control device being **characterized by** comprising:
an interruption unit that interrupts power supply to the servo motor in a standby state where the tool magazine is not operated;
a position detection unit that detects a position of the main shaft; and
a resumption unit that resumes power supply to the servo motor which has been interrupted by the interruption unit on condition that the position detection unit detects that the main shaft is positioned within the tool exchange area.

2. The numerical control device as claimed in claim 1, wherein the tool magazine is operable in a case where the main shaft is at a specific main shaft position within the tool exchange area, and
the resumption unit resumes power supply to the servo motor on condition that the position detection unit detects that the main shaft is at the specific main shaft position.

3. The numerical control device as claimed in claim 1, wherein the interruption unit interrupts power supply to the servo motor on condition that operation of the tool magazine enabled by the servo motor is completed in a state where power supply to the servo motor has been resumed by the resumption unit.

4. The numerical control device as claimed in claim 3, wherein the interruption unit interrupts power supply to the servo motor on condition that operation of the tool magazine enabled by the servo motor is completed in a state where power supply to the servo motor has been resumed by the resumption unit and that the position detection unit detects that the main shaft is positioned within the tool exchange area.

5. The numerical control device as claimed in claim 4, wherein the tool magazine is operable in a case where the main shaft is at a specific main shaft position within the tool exchange area,
the resumption unit resumes power supply to the servo motor on condition that the position detection unit detects that the main shaft is at the specific main shaft position, and
the interruption unit interrupts power supply to the servo motor on condition that operation of the tool magazine enabled by the servo motor is completed in a state where power supply to the servo motor has been resumed by the resumption unit and that the position detection unit detects that the main shaft has moved away from the specific main shaft position.

6. The numerical control device as claimed in claim 1, comprising a switching unit that switches between enabling and disabling interruption of power supply to the servo motor performed by the interruption unit.

7. A control method for controlling operation of a machine tool that comprises: a main shaft that is capable of mounting a tool and is movable between a machining area where machining of a workpiece is performed using the tool and a tool exchange area where exchange of the tool is performed; and a tool magazine that is capable of loading the tool and transports the tool to be mounted on the main shaft to a tool exchange position by driving of a servo motor, the control method being **characterized by** comprising:
an interruption step of interrupting power supply to the servo motor in a standby state where the tool magazine is not operated;
a position detection step of detecting a position of the main shaft; and
a resumption step of resuming power supply to the servo motor which has been interrupted by the interruption step on condition that the position detection step detects that the main shaft is positioned within the tool exchange area.

8. A program, **characterized by** causing a computer, which controls operation of a machine tool comprising: a main shaft that is capable of mounting a tool and is movable between a machining area where machining of a workpiece is performed using the tool and a tool exchange area where exchange of the tool is performed; and a tool magazine that is capable of loading the tool and transports the tool to be mounted on the main shaft to a tool exchange position by driving of a servo motor, to execute:
an interruption process of interrupting power supply to the servo motor in a standby state where the tool magazine is not operated;
a position detection process of detecting a position of the main shaft; and
a resumption process of resuming power supply to the servo motor which has been interrupted by the interruption process on condition that the position detection process detects that the main shaft is positioned within the tool exchange area.
